# EUROPEAN PATENT APPLICATION

(11) **EP 4 415 165 A1**
(43) Date of publication of application: **14.08.2024**
(21) Application number: 24153395.9
(22) Date of filing: 23.01.2024
(51) Int. Cl.: H01Q 1/27, H01Q 9/04, H01Q 9/06, H01Q 9/42, H01Q 21/28, G02B 27/01, H04R 1/10

(54) **ANTENNA NESTED AUDIO ASSEMBLY**

(30) Priority: 09.02.2023 US 202318166842
(71) Applicant: Meta Platforms Technologies, LLC, Menlo Park, CA 94025 (US)
(72) Inventor: Prasannakumar, Prathap Valale, Menlo Park (US); Azad, Umar, Menlo Park (US)
(74) Representative: Murgitroyd & Company

(57) **Abstract**

The disclosed system may include an antenna of a specified antenna type positioned on one side of the system within an audio module that includes an audio transducer. The system may also include another antenna of the specified antenna type positioned on a different side of the system within a different audio module. The various antennas may be configured to operate independently on the different respective sides of the system to provide uncorrelated data streams that include at least a minimum specified operational diversity. Various other mobile electronic devices, apparatuses, and methods are also disclosed.

## Description

### TECHNICAL FIELD

The present disclosure is generally directed to antenna architectures that are implemented within audio modules in mobile electronic devices such as augmented reality (AR) or virtual reality (VR) devices.

### BACKGROUND

Modern electronic devices and, in particular, mobile electronic devices, are becoming increasingly smaller and more lightweight. As such, space for antennas in AR/VR devices or other mobile electronic devices is becoming increasingly scarce. The antenna designs described herein may implement space that is currently occupied by audio speakers or other audio components. These audio components may appear on the left or right sides of a VR head-mounted display (HMD), for example, or on the left and right sides of AR glasses. Such audio components may include speakers (i.e., audio transducers), amplifiers, digital signal processors, or other electronic or mechanical components.

### SUMMARY

According to a first aspect, there is provided a system comprising: a first antenna of a specified antenna type positioned on a first side of the system within a first audio module that includes at least one audio transducer; and a second antenna of the specified antenna type positioned on a second, different side of the system within a second audio module, wherein the first and second antennas are configured to operate independently on the first and second respective sides of the system to provide uncorrelated data streams that include at least a minimum specified operational diversity.

The first antenna and the second antenna may operate independently in a multiple input multiple output (MIMO) data transfer scheme.

The second, different, side may be opposite to the first side of the system.

The system may comprise a virtual reality head mounted display (HMD).

The minimum specified operational diversity may comprise a minimum spatial pattern diversity between the first antenna and the second antenna.

The minimum specified operational diversity may comprise a minimum radiation pattern diversity between the first antenna and the second antenna.

The first audio module may further include at least one of an amplifier or a digital signal processor.

The first antenna may be mounted within a maximum distance from the audio transducer in the first audio module.

The first antenna may have a grounding that avoids conductive material of the audio transducer.

The first antenna may comprise a dipole antenna.

The first antenna may be grounded to conductive material of the audio transducer.

The first antenna may comprise at least one of an inverted-F antenna, a planar inverted-F antenna, or an inverted-L antenna.

The second antenna may be arranged similarly to the first antenna.

The system may be a mobile electronic device.

According to a second aspect, there is provided a method comprising: providing a first antenna of a specified antenna type positioned on a first side of a system within a first audio module that includes at least one audio transducer; providing a second antenna of the specified antenna type positioned on a second, different side of the system within a second audio module; and operating the first and second antennas independently on the first and second respective sides of the system to provide uncorrelated data streams that include at least a minimum specified operational diversity.

### BRIEF DESCRIPTION OF THE DRAWINGS

The accompanying drawings illustrate a number of examples and are a part of the specification. Together with the following description, these drawings demonstrate and explain various principles of the present disclosure.
FIG. 1 illustrates a side view of a mobile electronic device that incorporates an antenna according to at least one of the designs described herein.
FIG. 2 illustrates a front perspective view of a mobile electronic device that incorporates an antenna according to at least one of the designs described herein.
FIG. 3 illustrates a chart including measured or simulated parameters for one or more antennas in a mobile electronic device.
FIG. 4 illustrates a side view of an alternative mobile electronic device that incorporates an antenna according to at least one of the designs described herein.
FIG. 5 illustrates a front perspective view of an alternative mobile electronic device that incorporates an antenna according to at least one of the designs described herein.
FIG. 6 illustrates a chart including measured or simulated parameters for one or more antennas in a mobile electronic device.
FIG. 7 illustrates a perspective view of an alternative mobile electronic device that incorporates an antenna according to at least one of the designs described herein.
FIG. 8 illustrates a radiation pattern for left and right antennas according to one antenna design.
FIG. 9 illustrates a radiation pattern for left and right antennas according to a different antenna design.
FIG. 10 is an illustration of exemplary augmented-reality glasses that may be used in connection with embodiments and/or examples of this disclosure.
FIG. 11 is an illustration of an exemplary virtual-reality headset that may be used in connection with embodiments and/or examples of this disclosure.

Throughout the drawings, identical reference characters and descriptions indicate similar, but not necessarily identical, elements. While the examples described herein are susceptible to various modifications and alternative forms, specific arrangements and configurations have been shown by way of example in the drawings and will be described in detail herein. However, the scope of the present disclosure is not intended to be limited to the particular forms disclosed. Rather, the present disclosure covers all modifications, equivalents, and alternatives falling within the scope of the appended claims.

### DETAILED DESCRIPTION

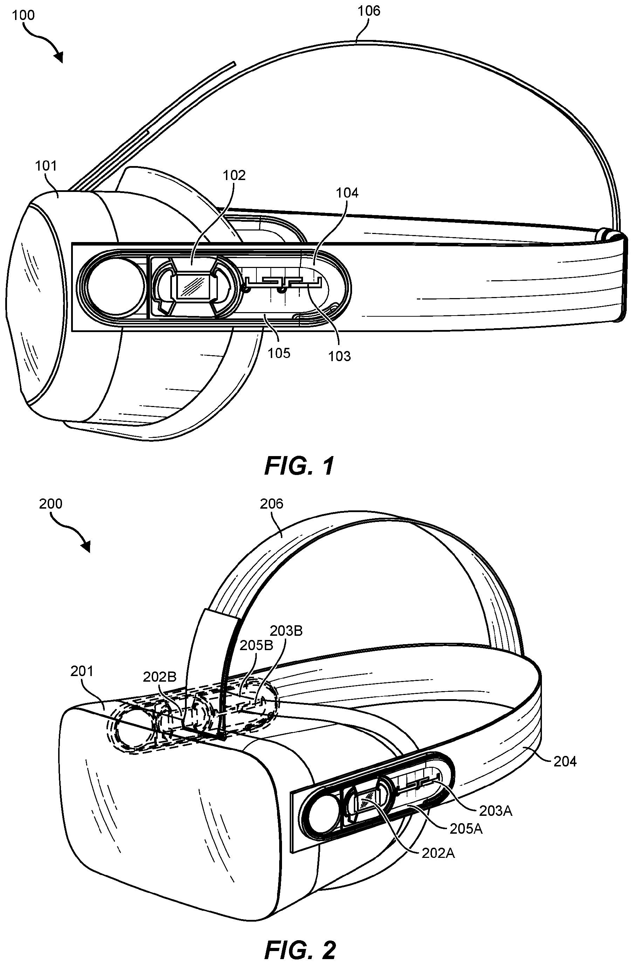

In one scenario, the antenna designs provided herein may implement left and right speakers as a ground plane for their radiating elements. For example, the audio transducers may be made, at least partially, from metal or other conductive elements. These conductive elements may be used as a ground plane for radiating elements in certain types of antennas. Moreover, in another scenario, the antenna designs provided herein may be co-located with existing right and left speakers but may each have their own separate grounding. In each of these cases, different antenna architectures (e.g., dipole, loop, inverted-F, etc.) may be used to maximize the available space within an audio module. Moreover, each of these antenna examples may provide independent MIMO streams with diverse radiation patterns that may improve total radiated power and reduce S11 return loss. Each of these examples will be explained in greater detail below with regard to FIGS. 1-11.

Features from any of the examples described herein may be used in combination with one another in accordance with the general principles described herein. These and other examples, features, and advantages will be more fully understood upon reading the following detailed description in conjunction with the accompanying drawings and claims.

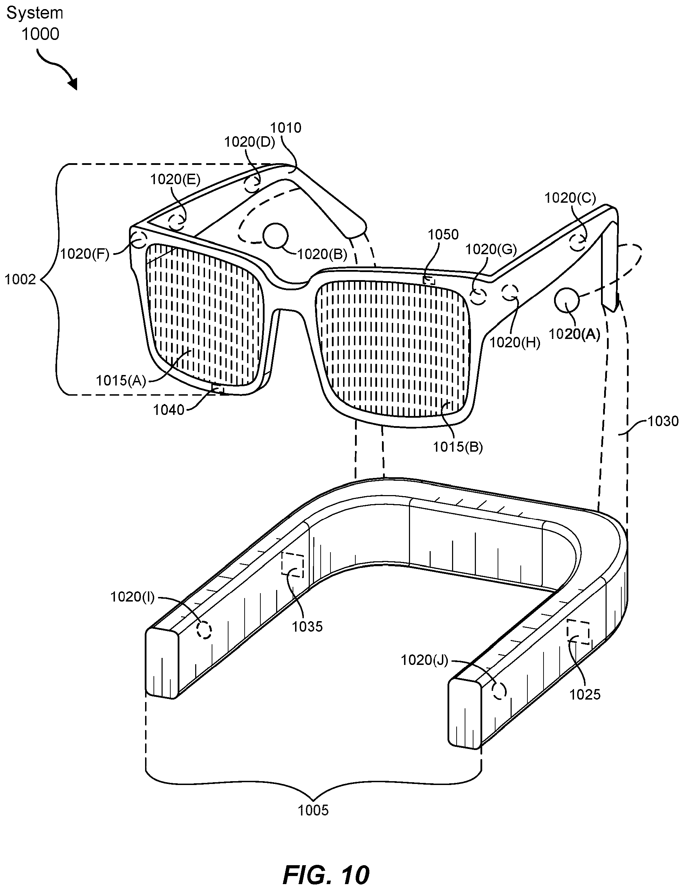

FIG. 1 illustrates a system 100 that may include antenna designs according to the examples herein. The system 100 may be a virtual reality head-mounted display, as shown in FIG. 1. Or, the system 100 may be a pair of AR glasses (e.g., as shown in FIG. 10), a smartwatch, a smartphone, a tablet, a laptop, a wearable electronic device, an internet of things (lOT) device, or other type of electronic device. Indeed, the system 100 may be any type of electronic device that implements at least one antenna for wireless communication with another electronic device.

In FIG. 1, a side view of a VR HMD is presented. The HMD may include a display 101 that is designed for placement in front of the user's eyes. A head strap 106 and a side strap 104 may be used to secure the VR HMD to the user's head. The head-mounted display 101 may also include an audio module 105. The audio module 105 may include various audio components 102 including speakers, microphones, amplifiers, digital signal processors, audio ports that direct sound to the user's ears, or other components.

The audio module 105 may further include at least one antenna 103. The antenna 103 may be substantially any type of antenna including a monopole, dipole, loop, patch, slot, inverted-F (IFA), planar inverted-F (PIFA), inverted-L, or other type of antenna. In some examples, as will be described further below, certain antennas may better suited to certain examples and, as such, those antenna architectures may be specifically used in those examples. In some cases, the antenna 103 may be placed within the audio module 105 but may have its own grounding. The antenna 103 may be placed among the various components of the audio module 105 including antenna feed components such as tuners, amplifiers, signal processors, impedance matching circuits, etc., audio components, or processing components. In such cases, the antenna 103 may coexist with the other components of the audio module 105 but may be separate from those components.

In other examples, the antenna 103 may be closely integrated with one or more components of the audio module. For instance, in some cases, the antenna 103 may be directly connected to one or more conductive audio components such as speakers or amplifiers. In such cases, the antenna 103 may implement those speakers or other components as a ground plane. Thus, in such cases, the antenna 103 may use the speaker's metal as a ground and may avoid having its own separate ground. This may help to further reduce the size, cost, and/or weight of the system 100.

In some examples, the system 100 may include an antenna 103 of a specified antenna type positioned on one side of the system within an audio module 105. As noted above, the audio module 105 may include an audio transducer and/or other components. In at least some of the examples herein, the antenna 103 of system 100 may be described as being placed on the right and left sides of the system. This may help align the audio modules with the user's ears. However, it should be noted that the audio module may be placed substantially anywhere on the system 100, including on the sides or the back of the head strap 104, on the top of the head strap 106, on the head-mounted display 101 or on a component of the display. The audio module 105 and a corresponding audio module may be placed directly opposite one another or may be placed in different positions relative to each other.

FIG. 2 illustrates a front perspective view of a system 200 that may be similar to or the same as system 100 of FIG. 1. In FIG. 2, a second antenna 203B may be visible, in addition to antenna 203A. The second antenna 203B may be of the same specified antenna type (e.g., dipole, loop, IFA, etc.) as the first antenna 203A and may be positioned on a different (e.g., opposite) side of the system 200 within a second audio module 205B. In this example, first and second antennas 203A/203B may be configured to operate independently on different sides of the system 200 in different audio modules 205A/205B. Each antenna 203A/203B may be placed within a different audio module 205A/205B, where each audio module has its own transducers and other audio components 202A/202B. These two antennas 203A/203B may then be operated together and, in this manner, may provide uncorrelated data streams that include a high level of operational diversity.

In some cases, this may include a level of operational diversity that is above at least a minimum threshold level of operational diversity. For instance, in some examples, a minimum baseline level of operational diversity may be established for the system 200, and the system may control the antennas in a manner that ensures that the minimum baseline level of operational diversity is being upheld. In some cases, the operational diversity may include a minimum level of spatial diversity between the two antennas 203A/203B. In such examples, the antennas may be placed sufficiently far apart to provide a minimum amount of spatial diversity between the two.

Or, in other cases, the operational diversity may include a minimum level of antenna pattern diversity between the two antennas 203A/203B. In the examples herein, the placement and type of antennas used may provide different antenna patterns for the two antennas 203A/203B. These different antenna patterns may provide sufficient pattern diversity to reach the minimum specified baseline level. Other types of operational diversity may also be addressed using the examples herein.

In the examples shown in FIGS. 1 and 2, the antennas may have a grounding that is separate from the audio transducer and avoids the conductive material of the audio transducer or other components of the audio module. As noted above, the audio module 205A (and/or audio module 205B) of FIG. 2 may include one or more metallic (or otherwise conductive) components. In this example, the antenna 203A (and/or antenna 203B) may be formed with its own ground plane or may be grounded to other system elements (e.g., to a printed circuit board (PCB's) ground plane, such as a PCB that holds processing components for processing digital audio signals).

In such cases, the antenna 203A may be a dipole antenna. Dipole antennas may operate at higher efficiency when placed away from other conductive materials. Thus, in such cases, the antenna 203A may be placed within the audio module 205A but may be placed at least a minimum distance away from the audio transducer or other conductive components. In this manner, the antenna 203A may coexist with other components of the audio module but may be separated from them by at least a minimum distance.

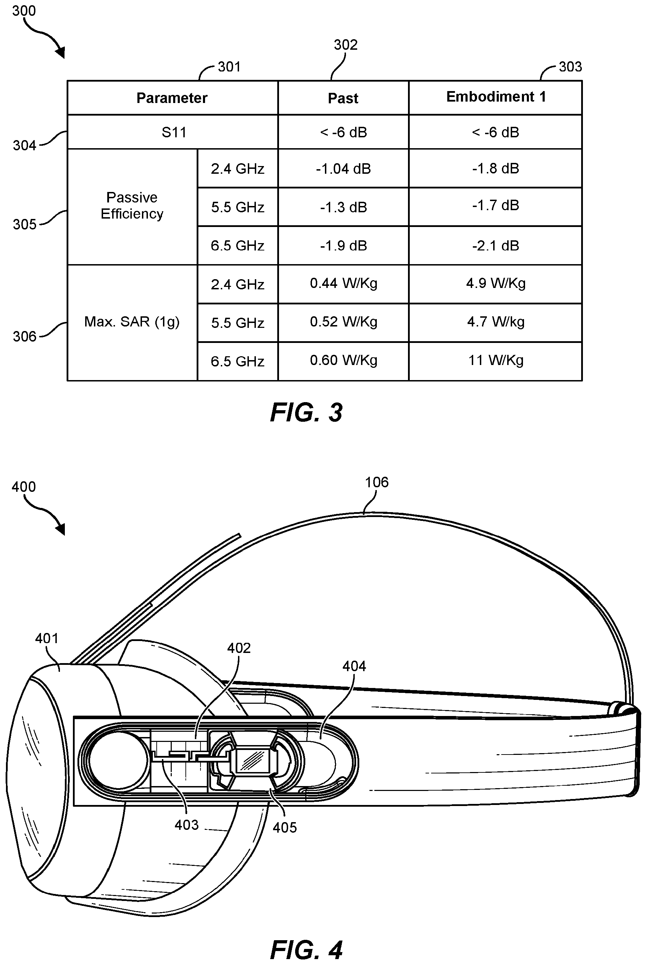

FIG. 3 illustrates a chart 300 that shows measurements for this type of example in which an antenna is positioned within an audio module but exists and operates separately from the audio module's components (as generally shown in FIGS. 1 and 2). Three different parameters 301 are shown (S11 (304), passive efficiency (305), and maximum specific absorption rate (SAR) (i.e., the rate at which electromagnetic energy is delivered to human tissue)). Each of these parameters 301 may be measured at different frequencies, including 2.4GHz, 5.5GHz, and 6.5GHz, although it will be recognized that the antennas described herein may operate at substantially any frequency. The "Past" measurements column 302 may refer to how antennas operated in previous mobile electronic devices, while the "Embodiment 1" measurements column 303 may refer to how the antenna examples described herein operate.

As can be seen, the "Embodiment 1" measurements are an improvement in substantially every parameter at each of the different frequencies. These improvements may result from increased spatial diversity due to the antennas being placed further apart from each other and/or from increased pattern diversity due to the specific types of antennas being used in specific examples. Additionally or alternatively, these improvements may result from placing the antennas away from conductive components in the head-mounted display that may absorb some of the antennas' radiation.

FIG. 4 illustrates a mobile electronic device 400. The mobile electronic device 400 may be a VR HMD, a pair of AR glasses, a smartphone, a smartwatch, a tablet, or other type of mobile device. In some examples, the mobile electronic device 400 may include an antenna of a specified antenna type (e.g., inverted-F) positioned on the left side of the system within a left-side audio module 405 intended for the user's left ear. The left-side audio module 405 may include one or more audio transducers, along with other audio components 404 used to generate and transfer sound to a user's ears. The left-side antenna 403 may be placed in a different position than the antenna 103 of FIG. 1. Indeed, in this example, the left-side antenna 403 may be positioned between the display 401 and the audio module 405.

In some cases, the left-side antenna may be positioned between a USB or other data port 402 and the audio module 405. In this example, the left-side antenna 403 may be electrically connected to one or more conductive portions of the audio module 405. In some cases, for instance, the left-side antenna 403 may be electrically connected to a metal speaker or other metallic audio component 404. In such cases, this electrical connection may ground the left-side antenna 403 to the speaker. And, as such, the left-side antenna 403 may not need to have a separate ground, thereby saving space, weight, and cost.

The mobile electronic device 400 may also include a right-side antenna of the same specified antenna type (e.g., inverted-F) positioned on the right side of the mobile electronic device 400 within a right-side audio module. The right-and left-side antennas may be configured to operate independently on the opposite sides of the mobile electronic device 400 to provide uncorrelated data streams that include at least a minimum specified operational diversity. These right-and left-side antennas may be spaced far enough apart to avoid correlation that may otherwise occur between signals. Such correlation may degrade signal quality due to the signals' constructive interference with each other. Reducing the correlation may provide improved S11 return loss, better efficiency, and a higher SAR, which allows the antennas to be operated at a higher level of power even when positioned near a user's head.

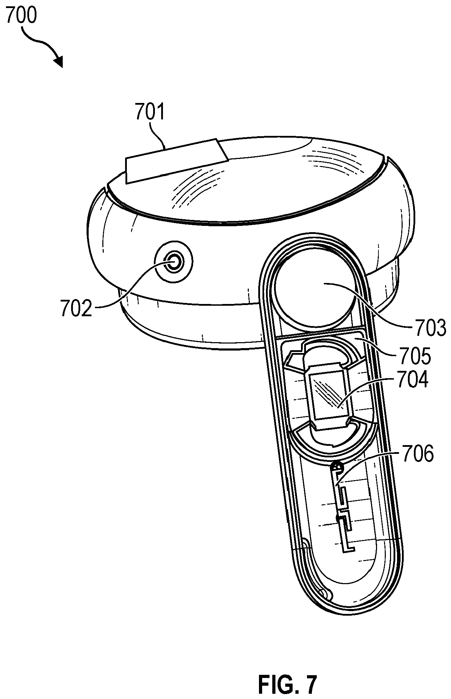

Still further, the placement on the sides of the mobile electronic device 400 may allow the right-and left-side antennas to operate at a minimum specified operational diversity. The operational diversity may be spatial diversity and/or antenna pattern diversity. The examples herein may be designed to operate at at least this minimum specified level of operational diversity. In some cases, the minimum level of operational diversity may allow the mobile electronic device 400 to operate using a multiple input multiple output (MIMO) data transfer scheme using the independent right-and left-side antennas. The MIMO data transfer scheme may allow communication with VR controllers (e.g., as shown in FIG. 7) and/or with other mobile electronic devices.

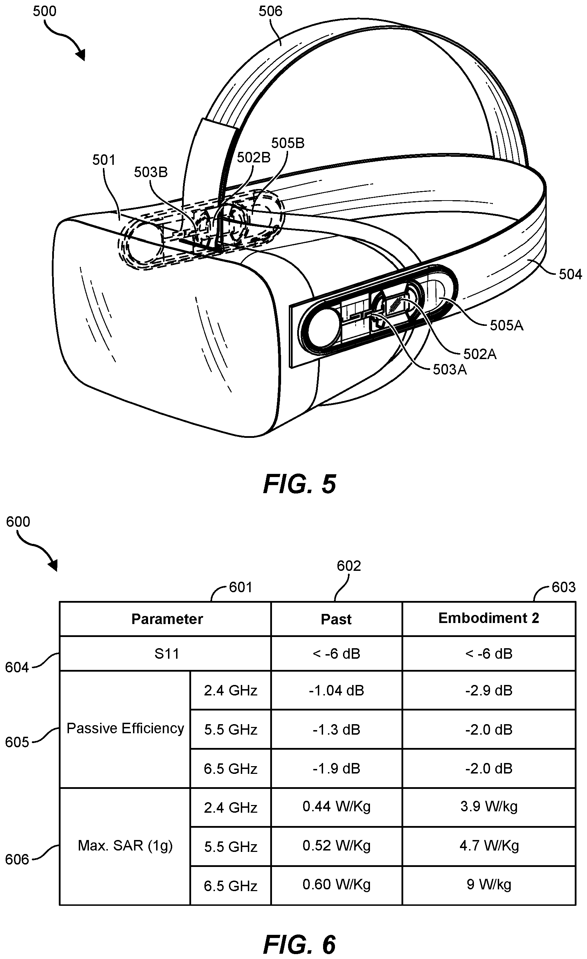

FIG. 5 illustrates a VR HMD 500 in which antennas may be positioned on opposite sides of the device. For instance, the right and left sides of the VR HMD 500 may each have an audio module 505A/505B. The audio modules 505A/505B may generate audio outputs intended for the user and may direct those audio sounds toward the user's ears using audio ports. The audio modules may contain one or multiple different audio transducers 502A/502B, including speakers or microphones. The antennas 503A/503B may be positioned on top of a speaker or may be part of a speaker or may otherwise be electrically connected to at least a part of a speaker.

Additionally or alternatively, the antennas 503A/503B may be electrically connected to an amplifier, a digital signal processor, a printed circuit board that hosts these audio components, or other conductive elements within the audio module. In this manner, the antennas 503A/503B may be grounded to one or more of the audio components in the audio modules 505A/505B. Using these components for grounding may allow the antenna(s) to avoid having their own separate ground. This may reduce the number of flexes, traces, or other components, thereby reducing weight and cost. Placing the antennas on or very near the speakers may also reduce the space allocated for antennas within the VR HMD 500.

In some cases, in order to be electrically connected to the speakers or other audio components of the audio modules 505A/505B, the antennas 503A/503B may be mounted within a specified maximum distance from the audio transducers or other components in the audio modules 505A/505B. This specified maximum distance may limit the placement of the antennas to within a (small) specified area around the speakers or other components. This placement may ensure that the antennas are properly grounded and are not taking up space unnecessarily. At least in some cases, placing the antennas on or near the speakers may save space for other components including batteries, processors, memory, data storage, sensors, or other electronic components.

The antennas 503A/503B, when grounded to the speakers or other audio components of the audio modules may produce unexpected results, as shown in chart 600 of FIG. 6. Chart 600 illustrates three different parameters 601, including an S11 return loss parameter 604, a passive efficiency parameter 605, and a maximum SAR parameter 606. The "Past" column 602 may illustrate measurements associated with past mobile electronic devices that did not implement the examples described herein.

In contrast, the "Embodiment 2" column 603 may illustrate measurements associated with the examples shown and described with reference to FIGS. 4 and 5. These examples exhibit notable improvements in passive efficiency and maximum SAR level in particular. This may be due, at least partially, to the improved spatial diversity that leads to less correlation between signals, and to the improved antenna pattern diversity caused by using specific types of antennas in specific situations.

For example, arrangements that ground the antennas to the speakers or other audio components may implement inverted-F antennas, planar inverted-F antennas, or inverted-L antennas. Such antennas may be particularly suited for this type of operation (e.g., as shown in FIGS. 4 and 5). Whereas in the examples described above with regard to FIGS. 1 and 2, in which the antennas are placed near the audio components but have their own separate grounding, dipole or similar antenna architectures may be used. Accordingly, the use of specific types of antennas in different scenarios may lead to improved antenna pattern diversity and improved signal strength and antenna operating efficiency.

FIG. 7 illustrates an example of a VR controller 700. This VR controller 700 may be used in conjunction with the VR HMDs of FIGS. 1, 2, 4, or 5. The VR controller 700 may include input components (e.g., 701), sensors (e.g., 702), input ports (e.g., 703), and audio transducers 704 or other audio components within an audio module 705. In the examples herein, an antenna 706 may be positioned within the audio module 705, either coexisting with the components of the audio module (and having its own ground) or being grounded to one or more of the audio module's components. By placing the antenna (or antennas) within the audio module 705, space may be saved for other VR controller components, including sensors, batteries, processors, memory, or other components.

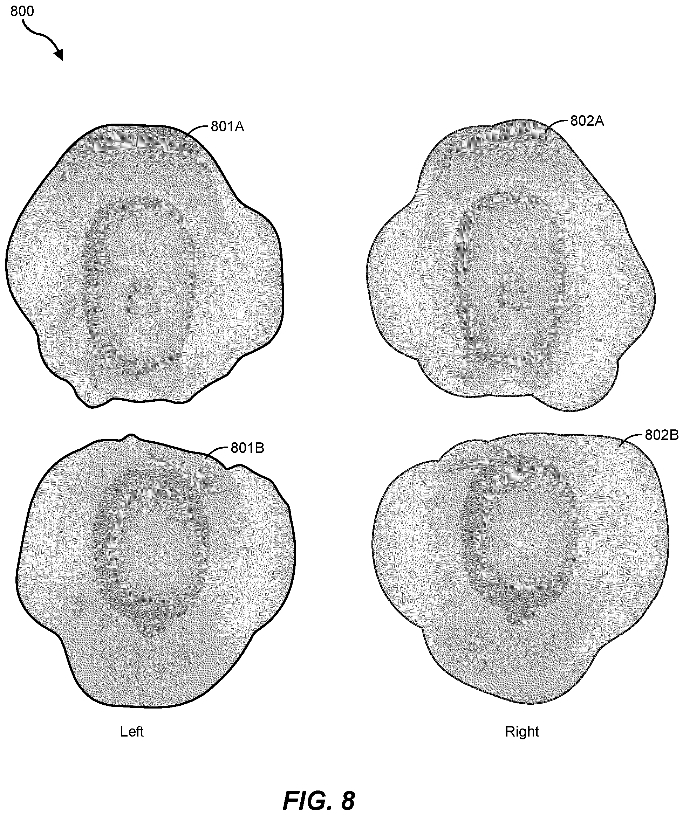

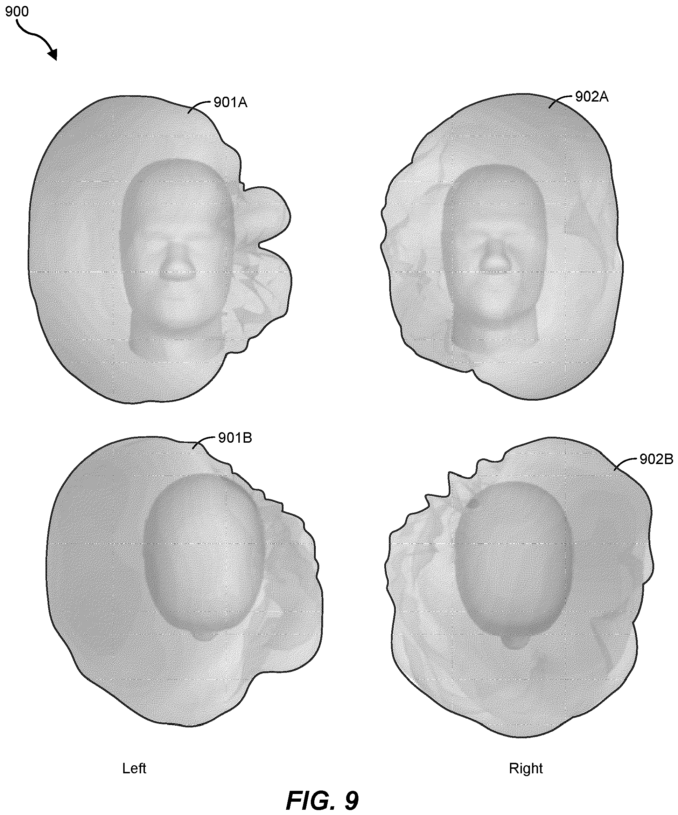

FIGS. 8 and 9 provide examples 800 and 900 that illustrate the differences in antenna pattern diversity between past implementations and the current implementations described herein. For instance, FIG. 8 illustrates frontal views and top views of left-side and right-side antenna patterns 801A, 801B, 802A, and 802B for antennas placed within a past mobile device. The antenna patterns are fairly omnidirectional, meaning that a large portion of the antenna's radiation is directed toward the user's head, leading to an undesirable lower SAR.

In contrast, the left-and right-side antenna patterns 901A, 901B, 902A, and 902B show a greater directivity away from the user's head. This may lead to a stronger signal and less correlation between the right- and left-side antennas. It may also lead to an increased SAR which, in turn, may allow the antennas to operate at higher power levels, thereby further increasing signal strength and reducing return path loss. Accordingly, as shown in FIG. 9, examples that implement the antenna designs described herein may show notable improvements across multiple different antenna parameters during operation.

In addition to the systems and mobile electronic devices described above, the examples herein may also provide apparatuses that may include: a first antenna of a specified antenna type positioned on a first side of the system within a first audio module that includes at least one audio transducer, and a second antenna of the specified antenna type positioned on a second, different side of the system within a second audio module, where the first and second antennas are configured to operate independently on the first and second respective sides of the system to provide uncorrelated data streams that include at least a minimum specified operational diversity.

Embodiments and examples of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some examples, artificial reality may also be associated with applications, products, accessories, services, or some combination thereof, that are used to, for example, create content in an artificial reality and/or are otherwise used in (e.g., to perform activities in) an artificial reality.

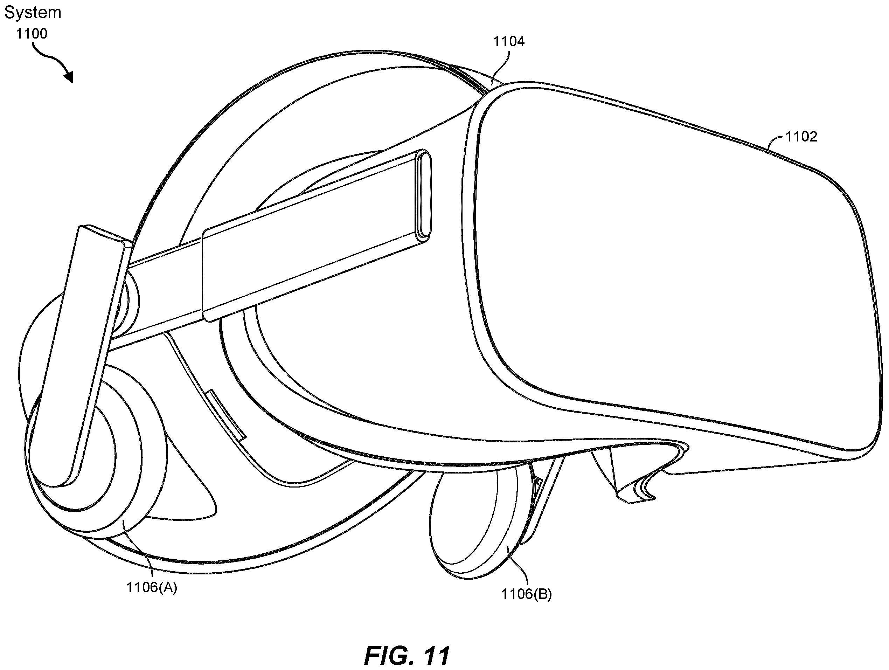

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 1000 in FIG. 10) or that visually immerses a user in an artificial reality (such as, e.g., virtual-reality system 1100 in FIG. 11). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 10, augmented-reality system 1000 may include an eyewear device 1002 with a frame 1010 configured to hold a left display device 1015(A) and a right display device 1015(B) in front of a user's eyes. Display devices 1015(A) and 1015(B) may act together or independently to present an image or series of images to a user. While augmented-reality system 1000 includes two displays, examples of this disclosure may be implemented in augmented-reality systems with a single NED or more than two NEDs.

In some examples, augmented-reality system 1000 may include one or more sensors, such as sensor 1040. Sensor 1040 may generate measurement signals in response to motion of augmented-reality system 1000 and may be located on substantially any portion of frame 1010. Sensor 1040 may represent one or more of a variety of different sensing mechanisms, such as a position sensor, an inertial measurement unit (IMU), a depth camera assembly, a structured light emitter and/or detector, or any combination thereof. In some examples, augmented-reality system 1000 may or may not include sensor 1040 or may include more than one sensor. In examples in which sensor 1040 includes an IMU, the IMU may generate calibration data based on measurement signals from sensor 1040. Examples of sensor 1040 may include, without limitation, accelerometers, gyroscopes, magnetometers, other suitable types of sensors that detect motion, sensors used for error correction of the IMU, or some combination thereof.

In some examples, augmented-reality system 1000 may also include a microphone array with a plurality of acoustic transducers 1020(A)-1020(J), referred to collectively as acoustic transducers 1020. Acoustic transducers 1020 may represent transducers that detect air pressure variations induced by sound waves. Each acoustic transducer 1020 may be configured to detect sound and convert the detected sound into an electronic format (e.g., an analog or digital format). The microphone array in FIG. 10 may include, for example, ten acoustic transducers: 1020(A) and 1020(B), which may be designed to be placed inside a corresponding ear of the user, acoustic transducers 1020(0), 1020(D), 1020(E), 1020(F), 1020(G), and 1020(H), which may be positioned at various locations on frame 1010, and/or acoustic transducers 1020(I) and 1020(J), which may be positioned on a corresponding neckband 1005.

In some examples, one or more of acoustic transducers 1020(A)-(J) may be used as output transducers (e.g., speakers). For example, acoustic transducers 1020(A) and/or 1020(B) may be earbuds or any other suitable type of headphone or speaker.

The configuration of acoustic transducers 1020 of the microphone array may vary. While augmented-reality system 1000 is shown in FIG. 10 as having ten acoustic transducers 1020, the number of acoustic transducers 1020 may be greater or less than ten. In some examples, using higher numbers of acoustic transducers 1020 may increase the amount of audio information collected and/or the sensitivity and accuracy of the audio information. In contrast, using a lower number of acoustic transducers 1020 may decrease the computing power required by an associated controller 1050 to process the collected audio information. In addition, the position of each acoustic transducer 1020 of the microphone array may vary. For example, the position of an acoustic transducer 1020 may include a defined position on the user, a defined coordinate on frame 1010, an orientation associated with each acoustic transducer 1020, or some combination thereof.

Acoustic transducers 1020(A) and 1020(B) may be positioned on different parts of the user's ear, such as behind the pinna, behind the tragus, and/or within the auricle or fossa. Or, there may be additional acoustic transducers 1020 on or surrounding the ear in addition to acoustic transducers 1020 inside the ear canal. Having an acoustic transducer 1020 positioned next to an ear canal of a user may enable the microphone array to collect information on how sounds arrive at the ear canal. By positioning at least two of acoustic transducers 1020 on either side of a user's head (e.g., as binaural microphones), augmented-reality system 1000 may simulate binaural hearing and capture a 3D stereo sound field around about a user's head. In some examples, acoustic transducers 1020(A) and 1020(B) may be connected to augmented-reality system 1000 via a wired connection 1030, and in other examples acoustic transducers 1020(A) and 1020(B) may be connected to augmented-reality system 1000 via a wireless connection (e.g., a BLUETOOTH connection). In still other examples, acoustic transducers 1020(A) and 1020(B) may not be used at all in conjunction with augmented-reality system 1000.

Acoustic transducers 1020 on frame 1010 may be positioned in a variety of different ways, including along the length of the temples, across the bridge, above or below display devices 1015(A) and 1015(B), or some combination thereof. Acoustic transducers 1020 may also be oriented such that the microphone array is able to detect sounds in a wide range of directions surrounding the user wearing the augmented-reality system 1000. In some examples, an optimization process may be performed during manufacturing of augmented-reality system 1000 to determine relative positioning of each acoustic transducer 1020 in the microphone array.

In some examples, augmented-reality system 1000 may include or be connected to an external device (e.g., a paired device), such as neckband 1005. Neckband 1005 generally represents any type or form of paired device. Thus, the following discussion of neckband 1005 may also apply to various other paired devices, such as charging cases, smart watches, smart phones, wrist bands, other wearable devices, hand-held controllers, tablet computers, laptop computers, other external compute devices, etc.

As shown, neckband 1005 may be coupled to eyewear device 1002 via one or more connectors. The connectors may be wired or wireless and may include electrical and/or nonelectrical (e.g., structural) components. In some cases, eyewear device 1002 and neckband 1005 may operate independently without any wired or wireless connection between them. While FIG. 10 illustrates the components of eyewear device 1002 and neckband 1005 in example locations on eyewear device 1002 and neckband 1005, the components may be located elsewhere and/or distributed differently on eyewear device 1002 and/or neckband 1005. In some examples, the components of eyewear device 1002 and neckband 1005 may be located on one or more additional peripheral devices paired with eyewear device 1002, neckband 1005, or some combination thereof.

Pairing external devices, such as neckband 1005, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 1000 may be provided by a paired device or shared between a paired device and an eyewear device, thus reducing the weight, heat profile, and form factor of the eyewear device overall while still retaining desired functionality. For example, neckband 1005 may allow components that would otherwise be included on an eyewear device to be included in neckband 1005 since users may tolerate a heavier weight load on their shoulders than they would tolerate on their heads. Neckband 1005 may also have a larger surface area over which to diffuse and disperse heat to the ambient environment. Thus, neckband 1005 may allow for greater battery and computation capacity than might otherwise have been possible on a stand-alone eyewear device. Since weight carried in neckband 1005 may be less invasive to a user than weight carried in eyewear device 1002, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 1005 may be communicatively coupled with eyewear device 1002 and/or to other devices. These other devices may provide certain functions (e.g., tracking, localizing, depth mapping, processing, storage, etc.) to augmented-reality system 1000. In the example of FIG. 10, neckband 1005 may include two acoustic transducers (e.g., 1020(I) and 1020(J)) that are part of the microphone array (or potentially form their own microphone subarray). Neckband 1005 may also include a controller 1025 and a power source 1035.

Acoustic transducers 1020(I) and 1020(J) of neckband 1005 may be configured to detect sound and convert the detected sound into an electronic format (analog or digital). In the example of FIG. 10, acoustic transducers 1020(I) and 1020(J) may be positioned on neckband 1005, thereby increasing the distance between the neckband acoustic transducers 1020(I) and 1020(J) and other acoustic transducers 1020 positioned on eyewear device 1002. In some cases, increasing the distance between acoustic transducers 1020 of the microphone array may improve the accuracy of beamforming performed via the microphone array. For example, if a sound is detected by acoustic transducers 1020(C) and 1020(D) and the distance between acoustic transducers 1020(C) and 1020(D) is greater than, e.g., the distance between acoustic transducers 1020(D) and 1020(E), the determined source location of the detected sound may be more accurate than if the sound had been detected by acoustic transducers 1020(D) and 1020(E).

Controller 1025 of neckband 1005 may process information generated by the sensors on neckband 1005 and/or augmented-reality system 1000. For example, controller 1025 may process information from the microphone array that describes sounds detected by the microphone array. For each detected sound, controller 1025 may perform a direction-of-arrival (DOA) estimation to estimate a direction from which the detected sound arrived at the microphone array. As the microphone array detects sounds, controller 1025 may populate an audio data set with the information. In examples in which augmented-reality system 1000 includes an inertial measurement unit, controller 1025 may compute all inertial and spatial calculations from the IMU located on eyewear device 1002. A connector may convey information between augmented-reality system 1000 and neckband 1005 and between augmented-reality system 1000 and controller 1025. The information may be in the form of optical data, electrical data, wireless data, or any other transmittable data form. Moving the processing of information generated by augmented-reality system 1000 to neckband 1005 may reduce weight and heat in eyewear device 1002, making it more comfortable to the user.

Power source 1035 in neckband 1005 may provide power to eyewear device 1002 and/or to neckband 1005. Power source 1035 may include, without limitation, lithium-ion batteries, lithium-polymer batteries, primary lithium batteries, alkaline batteries, or any other form of power storage. In some cases, power source 1035 may be a wired power source. Including power source 1035 on neckband 1005 instead of on eyewear device 1002 may help better distribute the weight and heat generated by power source 1035.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 1100 in FIG. 11, that mostly or completely covers a user's field of view. Virtual-reality system 1100 may include a front rigid body 1102 and a band 1104 shaped to fit around a user's head. Virtual-reality system 1100 may also include output audio transducers 1106(A) and 1106(B). Furthermore, while not shown in FIG. 11, front rigid body 1102 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 1000 and/or virtual-reality system 1100 may include one or more liquid crystal displays (LCDs), light emitting diode (LED) displays, microLED displays, organic LED (OLED) displays, digital light projector (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 1000 and/or virtual-reality system 1100 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 1000 and/or virtual-reality system 1100 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some examples, a single transducer may be used for both audio input and audio output.

In some examples, the artificial-reality systems described herein may also include tactile (i.e., haptic) feedback systems, which may be incorporated into headwear, gloves, bodysuits, handheld controllers, environmental devices (e.g., chairs, floor mats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The examples disclosed herein may enable or enhance a user's artificial-reality experience in one or more of these contexts and environments and/or in other contexts and environments.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain examples one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some examples, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the examples disclosed herein. This exemplary description is not intended to be exhaustive or to be limited to any precise form disclosed. Many modifications and variations are possible without departing from the scope of the present disclosure. The examples disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A system comprising:
a first antenna of a specified antenna type positioned on a first side of the system within a first audio module that includes at least one audio transducer; and
a second antenna of the specified antenna type positioned on a second, different side of the system within a second audio module,
wherein the first and second antennas are configured to operate independently on the first and second respective sides of the system to provide uncorrelated data streams that include at least a minimum specified operational diversity.

2. The system of claim 1, wherein the first antenna and the second antenna operate independently in a multiple input multiple output, MIMO, data transfer scheme.

3. The system of claim 1 or 2, wherein the second, different, side is opposite to the first side of the system.

4. The system of claim 3, wherein the system comprises a virtual reality head mounted display, HMD.

5. The system of any preceding claim, wherein the minimum specified operational diversity comprises a minimum spatial pattern diversity between the first antenna and the second antenna.

6. The system of any preceding claim, wherein the minimum specified operational diversity comprises a minimum radiation pattern diversity between the first antenna and the second antenna.

7. The system of any preceding claim, wherein the first audio module further includes at least one of an amplifier or a digital signal processor.

8. The system of any preceding claim, wherein the first antenna is mounted within a maximum distance from the audio transducer in the first audio module.

9. The system of claim 8, wherein the first antenna has a grounding that avoids conductive material of the audio transducer.

10. The system of claim 9, wherein the first antenna comprises a dipole antenna.

11. The system of claim 8, wherein the first antenna is grounded to conductive material of the audio transducer.

12. The system of claim 11, wherein the first antenna comprises at least one of an inverted-F antenna, a planar inverted-F antenna, or an inverted-L antenna.

13. The system of any preceding claim, wherein the system is a mobile electronic device.

14. A method comprising:
providing a first antenna of a specified antenna type positioned on a first side of a system within a first audio module that includes at least one audio transducer;
providing a second antenna of the specified antenna type positioned on a second, different side of the system within a second audio module; and
operating the first and second antennas independently on the first and second respective sides of the system to provide uncorrelated data streams that include at least a minimum specified operational diversity.
